Europäisches Patentamt

European Patent Office

Office européen des brevets

(11) Veröffentlichungsnummer: **0 022 913**
A1

## (12) EUROPÄISCHE PATENTANMELDUNG

(21) Anmeldenummer: 80102912.5

(22) Anmeldetag: 24.05.80

(51) Int. Cl.³: **B 01 J 8/44**
B 65 D 88/72
//B05C19/02

(30) Priorität: 24.07.79 DE 2929944

(43) Veröffentlichungstag der Anmeldung:
28.01.81 Patentblatt 81/4

(84) Benannte Vertragsstaaten:
BE DE FR GB IT LU NL

(71) Anmelder: Resicoat GmbH Beschichtungspulver
Tübinger Strasse 123
D-7410 Reutlingen(DE)

(72) Erfinder: Bruns, Bernd
Florianstrasse 3
D-7410 Reutlingen(DE)

(74) Vertreter: Schweikhardt, Friedrich, Dipl.-Ing. et al,
Robert-Bosch-Platz 1
D-7016 Gerlingen-Schillerhöhe(DE)

(54) Vorrichtung zum Fluidisieren von Pulvern.

(57) Es wird eine Vorrichtung vorgeschlagen, die zum Fluidisieren von pulverförmigen Stoffen dient. Um eine möglichst gleichmäßige Fluidisierwirkung zu erreichen und um ein bestimmtes, gewünschtes Fluidisierungsprofil erzeugen zu können, ist das Fluidisierbett (3) von dem an die Druckluft angeschlossenen Raum (4) durch eine gasundurchlässige Platte (2) getrennt, die eine oder mehrere gasdurchlässige Kerzen (5) aufweist, wobei die Kerzen (5) in das Fluidisierbett hineinragen. Die vorgeschlagene Erfindung kann in allen Vorrichtungen verwendet werden, in den Pulver fluidisiert werden müssen, so z.B. in Containern, die dem Pulvertransport dienen, und in Wirbelbetten für die Pulverbeschichtung sowie in Pulverbeschichtungsanlagen, in denen ein Pulver in fluidisiertem Zustand gehalten werden muß.

EP 0 022 913 A1

Croydon Printing Company Ltd.

R. RC 8
Pf/Jä 16.7.1979

Resicoat GmbH Beschichtungspulver, Reutlingen

Vorrichtung zum Fluidisieren von Pulvern

Stand der Technik

Die Erfindung geht aus von einer Vorrichtung zum Fluidisieren von pulverförmigen Stoffen in Containern,
Wirbelbetten oder dergleichen mittels Einblasen von
Druckluft nach der Gattung des Hauptanspruchs. Bei
Containern oder Wirbelbetten ist es üblich, den Druckluftraum von dem Fluidisierbett durch eine durchgehend
gasdurchlässige Platte, z.B. aus Sinterbronze, zu trennen.
Die durch diese poröse Platte hindurchtretende Luft
fluidisiert dann das Pulver auf der ganzen Fläche. Ein
Nachteil dieser Anordnung ist der, daß die Luft nur aus
einer Ebene in das zu fluidisierende Pulver eintritt.
Dadurch sind individuelle Gestaltungen des Fluidbettes
praktisch kaum möglich. Ein weiterer Nachteil ist der,
daß bei Verstopfen des Fluidisierbodens in Form einer
porösen Platte dieser Boden als Ganzes ausgewechselt
werden muß, was naturgemäß sehr umständlich ist. Schließlich sind derartige Platten aus Sinterbronze recht stoßempfindlich und müssen als Sonderbauteil angefertigt werden.

- 2 -

Vorteile der Erfindung

Die erfindungsgemäße Vorrichtung mit den kennzeichnenden Merkmalen des Hauptanspruchs hat demgegenüber den Vorteil, daß die Luft zum Fluidisieren in drei Ebenen ausströmt, wodurch eine gleichmäßigere Fluidwirkung bei einem geringeren Luftdruck und Luftverbrauch möglich ist. Der geringe Luftdruck, der hier angewendet werden kann, ermöglicht, vor allem bei Containern für Kunststoffpulver, eine einfachere Gewährleistung der Sicherheit. Die Ausströmrichtung kann individuell gestaltet werden und somit unterschiedlichen geometrischen Gestaltungen des Behälters angepaßt werden. Bei Verstopfen ist ein einfaches Auswechseln der Kerze möglich. Außerdem ist die gasundurchlässige Platte mit den gasdurchlässigen Kerzen statisch stabiler als eine Sinterplatte und weniger stoßempfindlich. Während die Sinterplatte nach dem Stand der Technik ein Sonderbauteil ist, sind die gasdurchlässigen Kerzen in Form von Filterkerzen aus Sinterbronze im Handel in vielen Größen und Ausführungen erhältlich. Durch unterschiedlich große Kerzen kann daher ein unterschiedliches Fluidisierverhalten erzielt werden und das Fluidbett kann in einfacher Weise, späteren Erkenntnissen entsprechend, nachgerüstet werden. Schließlich ist wegen des geringeren notwendigen Luftdrucks die Staubentwicklung beim Fluidisieren geringer als bei den Fluidisierböden nach dem Stand der Technik.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist es, wenn die Kerzen ein Gewinde aufweisen, mit dem sie in einfacher Weise in die gasundurchlässige Platte eingeschraubt werden. Hierdurch ist ein einfaches Auswechseln der Kerzen möglich.

Zeichnung

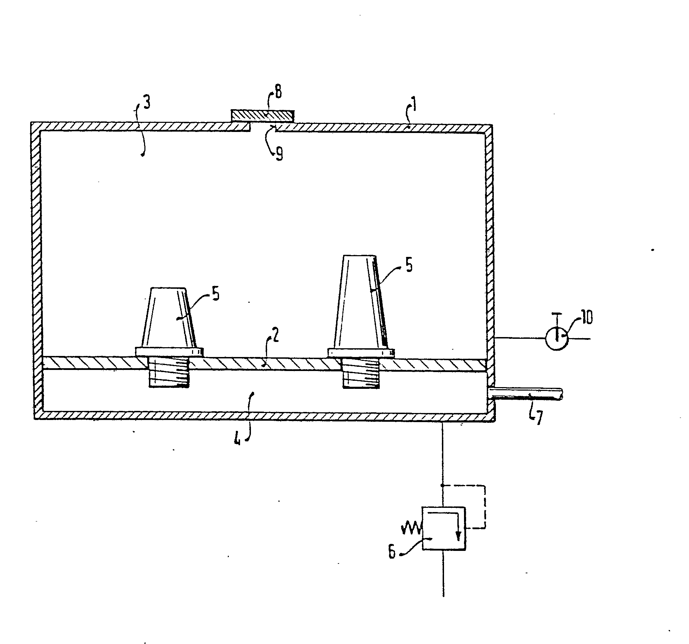

Ein Ausführungsbeispiel der Erfindung ist in der Zeichnung dargestellt und in der nachfolgenden Beschreibung
näher erläutert. Die Figur zeigt schematisch einen Container zum Transport von Kunststoffpulver, wie es beispielsweise für die elektrostatische Pulverbeschichtung
verwendet wird, wobei der Container universell einsetzbar ist, indem eine Entleerung entweder von oben mit
einer Pulverpumpe oder von unten durch ein Auslaßventil
möglich ist.

Beschreibung des Ausführungsbeispiels

Der Container besteht aus einem Blechmantel 1 und
weist im unteren Teil eine massive Stahlplatte 2 auf,
die den Container unterteilt in ein Fluidisierbett 3
und einen an die Druckluft angeschlossenen Raum 4. In
die Stahlplatte 2 werden Gewinde eingedreht, in die
gasdurchlässige Kerzen 5 eingeschraubt werden. Ein
Druckbegrenzungsventil 6 sorgt als Sicherheitsventil
für eine Begrenzung des Luftdrucks. Die Druckluft wird
über einen Stutzen 7 dem Raum 4 zugeführt. Der Container
weist oben eine mit einem Deckel 8 verschließbare Öffnung 9 auf, über die der Container gefüllt wird, aber
auch mittels einer Pulverpumpe entleert werden kann.
Oberhalb der Stahlplatte 2 weist der Container noch ein
Auslaßventil 10 auf, z.B. in Form einer Zellenradschleuse,
durch das ebenfalls eine Entleerung des Containers möglich
ist.

Ein Container von 1 m$^3$ Inhalt und einer Größe der
Platte 2 von 0,03 m$^2$ enthält etwa 24 Filterkerzen 5
von ca. $^1/4$'' Durchmesser und 26 mm Höhe. Zum Entleeren wird an den Stutzen 7 Druckluft von 0,5 - 1,0 bar angeschlossen. Das Druckbegrenzungsventil 6 wird auf einen Druck von 1,5 bar eingestellt. Nachdem sich das Pulver im Fluidisierbett 3 im fluidisierten Zustand befindet, kann es über die Öffnung 9 mit Hilfe einer Pulverpumpe entleert werden.

Das gleiche Prinzip des Fluidisierbodens kann überall dort verwendet werden, wo eine Pulver in fluidisiertem Zustand gehalten werden soll. Das gilt insbesondere auch für Wirbelsinterbetten, in denen Gegenstände mit Kunststoff- oder Emailpulvern beschichtet werden sollen.

R. RC 8
Pf/Jä 16.7.1979

Resicoat GmbH Beschichtungspulver, Reutlingen

Ansprüche

1. Vorrichtung zum Fluidisieren von pulverförmigen Stoffen
in Containern, Wirbelbetten oder dergleichen mittels Einblasen von Druckluft, dadurch gekennzeichnet, daß ein
Fluidisierbett (3) von einem an die Druckluft angeschlossenem Raum (4) durch eine gasundurchlässige Platte (2)
getrennt ist, die je nach Größe des Fluidiserbettes
eine oder mehrere gasdurchlässige Kerzen (5) aufweist,
wobei die Kerzen (5) in das Fluidisierbett (3) hineinragen.

2. Vorrichtung nach Anspruch 1, dadurch gekennzeichnet,
daß die Kerzen (5) aus Sinterbronze bestehen und ein
Gewinde aufweisen, mit dem sie in die gasundurchlässige
Platte (2) eingeschraubt sind.

3. Vorrichtung nach Anspruch 1 oder 2, dadurch gekennzeichnet, daß zur Erzielung eines gewünschten Fluidisierprofils die Platte (2) mit Kerzen unterschiedlicher Größe
und/oder unterschiedlicher Gasdurchlässigkeit bestückt
ist.

0022913

Europäisches
Patentamt

## EUROPÄISCHER RECHERCHENBERICHT

Nummer der Anmeldung
EP 80 10 2912

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | US - A - 3 773 297 (D.C. STELTZ) <br> * Zusammenfassung; Abbildungen 6-9; Spalte 1, Zeilen 17-56; Spalte 4, Zeilen 8-67 * <br><br> -- | 1,2 | B 01 J 8/44 <br> B 65 D 88/72// <br> B 05 C 19/02 |
| A | DE - A - 2 745 165 (IBAU) | | |
| A | US - A - 3 552 033 (A.B. STEEVER et al. ) | | |
| A | US - A - 3 672 577 (W.W. KRAMER) | | RECHERCHIERTE SACHGEBIETE (Int. Cl 3) |
| A | DE - A - 1 667 049 (FORSCHUNGSIN-STITUT FUR NE-METALLE) <br><br> ---- | | B 01 j 8/18 <br> 8/44 <br> B 05 C 19/02 <br> B 65 D 88/72 <br> F 23 C 11/02 |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angefuhrtes Dokument

L: aus andern Grunden angefuhrtes Dokument

&: Mitglied der gleichen Patent-familie, übereinstimmendes Dokument

| X | Der vorliegende Recherchenbericht wurde für alle Patentansprüche erstellt. |
|---|---|

| Recherchen Den Haag | Abschlußdatum der Recherche 08-10-1980 | Prüfer SIEM |
|---|---|---|

EPA form 1503.1  06.78